(19) Europäisches Patentamt
European Patent Office
Office européen des brevets

(11) **EP 4 734 008 A1**

(12) **EUROPEAN PATENT APPLICATION**
published in accordance with Art. 153(4) EPC

(43) Date of publication:
**29.04.2026 Bulletin 2026/18**

(21) Application number: **24855761.3**

(22) Date of filing: **19.08.2024**

(51) International Patent Classification (IPC):
**G06N 10/20** (2022.01)

(52) Cooperative Patent Classification (CPC):
**G06N 10/20**

(86) International application number:
**PCT/CN2024/112961**

(87) International publication number:
**WO 2025/040038 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.08.2023 CN 202311077099**

(71) Applicant: **Huawei Technologies Co., Ltd.**
**Shenzhen, Guangdong 518129 (CN)**

(72) Inventors:
• **LONG, Junling**
**Shenzhen, Guangdong 518129 (CN)**
• **ZOU, Yang**
**Shenzhen, Guangdong 518129 (CN)**
• **LIANG, Wenye**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **SUPERCONDUCTING QUBIT COUPLING DEVICE, SUPERCONDUCTING QUANTUM CHIP, AND QUANTUM COMPUTER**

(57) A superconducting qubit coupling apparatus, a superconducting quantum chip, and a quantum computer are disclosed. The superconducting qubit coupling apparatus includes a first superconducting qubit (10), a second superconducting qubit (20), a first coupling module (40), a second coupling module (50), and a tunable coupling module (30). The tunable coupling module (30) includes two resonant circuits, and a frequency of at least one of the resonant circuits is tunable. According to this application, a strength of coupling between one of the two resonant circuits of the tunable coupling module (30) and the first superconducting qubit (10) and a strength of coupling between the other and the first superconducting qubit (10) are of opposite signs, and magnitudes of the coupling strengths are the same or close; and a strength of coupling between one of the two resonant circuits of the tunable coupling module and the second superconducting qubit (20) and a strength of coupling between the other and the second superconducting qubit (20) are of a same sign, and magnitudes of the coupling strengths are the same or close. Therefore, when a frequency of a first resonant circuit and a frequency of a second resonant circuit are the same or close, coupling between the two superconducting qubits is turned off. In addition, the coupling turning-off is unrelated to frequencies of the two superconducting qubits. Therefore, the two superconducting qubits have a feature of full-band coupling turning-off.

FIG. 2

## Description

This application claims priority to Chinese Patent Application No. 202311077099.0, filed with the China National Intellectual Property Administration on August 24, 2023 and entitled "SUPERCONDUCTING QUBIT COUPLING APPARATUS, SUPERCONDUCTING QUANTUM CHIP, AND QUANTUM COMPUTER", which is incorporated herein by reference in its entirety.

## TECHNICAL FIELD

Embodiments of this application relate to the field of quantum computing, and in particular, to a superconducting qubit coupling apparatus, a superconducting quantum chip, and a quantum computer.

## BACKGROUND

Quantum computing is a novel computing method that harnesses properties such as quantum superposition and entanglement based on quantum mechanics. For some particular problems such as large-number decomposition and quantum chemistry simulation, quantum computing theoretically has an advantage of exponential acceleration over classical computing. Superconducting qubits are currently one of the most promising physical systems for implementing quantum computing. Superconducting quantum computing is a quantum computing solution that is based on superconducting circuits. The superconducting circuits are microwave circuits that include basic components such as capacitors, inductors, transmission lines, and Josephson junctions. A superconducting circuit chip operates in an ultra-low-temperature environment provided by a dilution refrigerator, to achieve superconductivity.

At the beginning of development of superconducting qubits, superconducting qubits are coupled via fixed capacitors or quantum buses (quantum buses). This type of design reduces complexity of circuits, alleviates burdens on superconducting circuit design and micro/nano processing, and achieves good effect. However, as a quantity of superconducting qubits increases, a circuit scale is growing. Inter-bit crosstalk caused by fixed coupling between superconducting qubits that cannot be turned off results in a series of problems that are difficult to resolve, such as being difficult to simultaneously implement single-bit logic gates, and limited fidelity of two-bit logic gate operations.

To resolve these problems, some researchers began to design tunable couplers for coupling bits. Introduction of the tunable couplers has indeed greatly alleviated the crosstalk problem in a multi-bit system, but has also increased difficulty of manipulation due to introduction of an additional degree of freedom in manipulation. Existing turning-off conditions of the tunable couplers are all related to frequencies of superconducting qubits. Any tuning of a frequency of a superconducting qubit requires re-tuning of bias points of surrounding couplers. In other words, if a frequency of a superconducting qubit changes, a coupling turning-off condition cannot be met. Therefore, currently, it is urgent to provide a solution capable of implementing that a coupling turning-off condition is unrelated to a frequency of a superconducting qubit.

## SUMMARY

Embodiments of this application provide a superconducting qubit coupling apparatus, a superconducting quantum chip, and a quantum computer, simplifying a manner of tuning for turning off coupling between two superconducting qubits, implementing turning-off of the coupling between the two superconducting qubits across an entire frequency band, and providing a larger degree of freedom for frequency allocation for a plurality of superconducting qubits.

According to a first aspect, an embodiment of this application provides a superconducting qubit coupling apparatus. The superconducting qubit coupling apparatus specifically includes a first superconducting qubit, a second superconducting qubit, a first coupling module, a second coupling module, and a tunable coupling module. The tunable coupling module is coupled to the first superconducting qubit via the first coupling module, and the tunable coupling module is coupled to the second superconducting qubit via the second coupling module. The tunable coupling module includes a first resonant circuit and a second resonant circuit, and a frequency of at least one of the first resonant circuit and the second resonant circuit is tunable. A strength of coupling between the first resonant circuit and the first superconducting qubit and a strength of coupling between the second resonant circuit and the first superconducting qubit are of opposite signs, and absolute values of the coupling strengths are the same or close; and a strength of coupling between the first resonant circuit and the second superconducting qubit and a strength of coupling between the second resonant circuit and the second superconducting qubit are of opposite signs, and the coupling strengths are the same or close. When a frequency of the first resonant circuit and a frequency of the second resonant circuit are the same or close, coupling between the first superconducting qubit and the second superconducting qubit is turned off, which is implemented by tuning the frequency of at least one of the first resonant circuit and the second resonant circuit.

In this implementation, only one tuning is needed to turn off the coupling between the first superconducting qubit and the second superconducting qubit. In addition, the coupling turning-off is unrelated to the frequencies of the two superconducting qubits, simplifying a manner of tuning for turning off the coupling between the two superconducting qubits. In other words, regardless of how the frequencies of the superconducting qubits change in a subsequent process, a bias point of the tunable coupling module does not need to be changed, implementing turning-off of the coupling between the two superconducting qubits across an entire frequency band. Even if the frequency of a superconducting qubit changes due to a transition to a high energy level, the coupling between the two superconducting qubits can still be turned off, helping suppress leakage into a high energy level, and improving fidelity of logic gates during parallel implementation of the logic gates in the superconducting qubit coupling apparatus. In addition, because turning-off of the coupling between the two superconducting qubits is unrelated to the frequencies of the two superconducting qubits, a larger degree of freedom is provided for frequency allocation for a plurality of superconducting qubits. Moreover, when gate operations are implemented in parallel on a plurality of bits, there is no coupling leakage problem. Therefore, high-fidelity multi-bit gates can be implemented in parallel.

In some possible implementations, the first superconducting qubit includes a first electrode and a second electrode, neither the first electrode nor the second electrode is grounded, and when the first superconducting qubit is in resonance, a voltage across the first electrode and a voltage across the second electrode are of opposite signs. This helps meet the following that is in the coupling turning-off condition: The strength of the coupling between one of the two resonant circuits of the tunable coupling module and the first superconducting qubit and the strength of the coupling between the other and the first superconducting qubit are of opposite signs, and magnitudes of the coupling strengths are the same or close.

In some possible implementations, the first electrode includes a first capacitance to ground, the second electrode includes a second capacitance to ground, and magnitudes of the first capacitance to ground and the second capacitance to ground are the same or close. This helps meet the following that is in the coupling turning-off condition: The strength of the coupling between one of the two resonant circuits of the tunable coupling module and the first superconducting qubit and the strength of the coupling between the other and the first superconducting qubit are of opposite signs, and magnitudes of the coupling strengths are the same or close.

In some possible implementations, the first electrode and the second electrode are connected by a first inductor circuit, and the first inductor circuit includes at least one Josephson junction. Therefore, this implementation has good practical applicability.

In some possible implementations, the first coupling module includes a first capacitance and a second capacitance, the first resonant circuit is coupled to the first electrode via the first capacitance, and the second resonant circuit is coupled to the second electrode via the second capacitance. Magnitudes of the first capacitance and the second capacitance are the same or close. This helps meet the following that is in the coupling turning-off condition: The strength of the coupling between one of the two resonant circuits of the tunable coupling module and the first superconducting qubit and the strength of the coupling between the other and the first superconducting qubit are of opposite signs, and magnitudes of the coupling strengths are the same or close.

In some possible implementations, a first parasitic capacitance in the first coupling module is located between the first resonant circuit and the second electrode, and a second parasitic capacitance in the first coupling module is located between the second resonant circuit and the first electrode. Magnitudes of the first parasitic capacitance and the second parasitic capacitance are the same or close. This helps meet the following that is in the coupling turning-off condition: The strength of the coupling between one of the two resonant circuits of the tunable coupling module and the first superconducting qubit and the strength of the coupling between the other and the first superconducting qubit are of opposite signs, and magnitudes of the coupling strengths are the same or close.

In some possible implementations, the first resonant circuit and the second resonant circuit are both tunable couplers. Alternatively, the first resonant circuit is a tunable coupler, and the second resonant circuit is a fixed coupler. In this implementation, a plurality of implementations of the tunable coupling module are provided, enhancing scalability of this solution.

In some possible implementations, the second superconducting qubit includes a third electrode, the third electrode is grounded through a second inductor circuit, the second inductor circuit includes at least one Josephson junction, and the first resonant circuit and the second resonant circuit are separately coupled to the third electrode via the second coupling module. In other words, the second superconducting qubit may be of a single-electrode grounded structure, achieving good implementability.

In some possible implementations, the second coupling module includes a third capacitance and a fourth capacitance, the first resonant circuit is coupled to the third electrode of the second superconducting qubit via the third capacitance, the second resonant circuit is coupled to the third electrode of the second superconducting qubit via the fourth capacitance, and magnitudes of the third capacitance and the fourth capacitance are the same or close. For the scenario in which the second superconducting qubit is of the single-electrode grounded structure, a design of the second coupling module is provided. This helps meet the following that is in the coupling turning-off condition: The strength of the coupling between one of the two resonant circuits of the tunable coupling module and the second superconducting qubit and the strength of the coupling between the other and the second superconducting qubit are of a same sign, and magnitudes of the coupling strengths are the same or close.

In some possible implementations, the second superconducting qubit includes a fourth electrode and a fifth electrode, neither the fourth electrode nor the fifth electrode is grounded, the fourth electrode and the fifth electrode are connected by a third inductor circuit, the third inductor circuit includes at least one Josephson junction, and the first resonant circuit and the second resonant circuit are separately coupled to the fourth electrode via the second coupling module. In other words, the second superconducting qubit may alternatively be of a two-electrode floating structure, improving flexibility of this solution.

In some possible implementations, the second coupling module includes a third capacitance and a fourth capacitance, the first resonant circuit is coupled to the fourth electrode of the second superconducting qubit via the third capacitance, the second resonant circuit is coupled to the fourth electrode of the second superconducting qubit via the fourth capacitance, and magnitudes of the third capacitance and the fourth capacitance are the same or close. For the scenario in which the second superconducting qubit is of the two-electrode floating structure, a design of the second coupling module is provided. This helps meet the following that is in the coupling turning-off condition: The strength of the coupling between one of the two resonant circuits of the tunable coupling module and the second superconducting qubit and the strength of the coupling between the other and the second superconducting qubit are of a same sign, and magnitudes of the coupling strengths are the same or close.

In some possible implementations, a third parasitic capacitance in the second coupling module is located between the first resonant circuit and the fifth electrode, and a fourth parasitic capacitance in the second coupling module is located between the second resonant circuit and the fifth electrode. Magnitudes of the third parasitic capacitance and the fourth parasitic capacitance are the same or close. This helps meet the following that is in the coupling turning-off condition: The strength of the coupling between one of the two resonant circuits of the tunable coupling module and the second superconducting qubit and the strength of the coupling between the other and the second superconducting qubit are of a same sign, and magnitudes of the coupling strengths are the same or close.

In some possible implementations, the first resonant circuit and the second resonant circuit have a shared circuit structure, and the shared circuit structure is coupled to the second superconducting qubit via the second coupling module. This design of the tunable coupling module better helps meet the coupling turning-off condition.

In some possible implementations, the second superconducting qubit includes a third electrode, the third electrode is grounded through a second inductor circuit, the second inductor circuit includes at least one Josephson junction, and the circuit structure shared by the first resonant circuit and the second resonant circuit is coupled to the third electrode via the second coupling module. In other words, the second superconducting qubit may be of a single-electrode grounded structure, achieving good implementability.

In some possible implementations, the second coupling module includes a fifth capacitance, and the circuit structure shared by the first resonant circuit and the second resonant circuit is coupled to the third electrode of the second superconducting qubit via the fifth capacitance. Another design of the second coupling module is provided herein. A structure is simpler, and the coupling turning-off condition is easier to meet.

In some possible implementations, the second superconducting qubit includes a fourth electrode and a fifth electrode, neither the fourth electrode nor the fifth electrode is grounded, the fourth electrode and the fifth electrode are connected by a third inductor circuit, the third inductor circuit includes at least one Josephson junction, and the circuit structure shared by the first resonant circuit and the second resonant circuit is coupled to the fourth electrode via the second coupling module. In other words, the second superconducting qubit may alternatively be of a two-electrode floating structure, improving flexibility of this solution.

In some possible implementations, the second coupling module includes a fifth capacitance, and the circuit structure shared by the first resonant circuit and the second resonant circuit is coupled to the fourth electrode of the second superconducting qubit via the fifth capacitance. Another design of the second coupling module is provided herein. A structure is simpler, and the coupling turning-off condition is easier to meet.

In some possible implementations, a fifth parasitic capacitance in the second coupling module is located between the fifth electrode and the circuit structure shared by the first resonant circuit and the second resonant circuit, and the fifth parasitic capacitance is less than the fifth capacitance. This helps meet the following that is in the coupling turning-off condition: The strength of the coupling between one of the two resonant circuits of the tunable coupling module and the second superconducting qubit and the strength of the coupling between the other and the second superconducting qubit are of a same sign, and magnitudes of the coupling strengths are the same or close.

In some possible implementations, at least one of the first resonant circuit and the second resonant circuit includes a tunable inductor and/or a tunable capacitance, the at least one of the first resonant circuit and the second resonant circuit further includes a bias line, and the bias line is configured to tune a magnitude of the tunable inductor and/or a magnitude of the tunable capacitance. This ensures that the frequency of at least one of the resonant circuits in the tunable coupling module is tunable.

In some possible implementations, the first superconducting qubit is a fixed-frequency transmon, a tunable transmon, a fluxonium qubit, or a capacitively shunted flux qubit, and the second superconducting qubit is a fixed-frequency transmon, a tunable transmon, a fluxonium qubit, or a capacitively shunted flux qubit. In this way, scenarios to which this solution is applicable expand.

According to a second aspect, an embodiment of this application provides a superconducting quantum chip. The superconducting quantum chip includes a plurality of superconducting qubit coupling apparatuses according to any one of the implementations of the first aspect. The plurality of superconducting qubit coupling apparatuses are distributed in an array, every two adjacent superconducting qubit coupling apparatuses share one superconducting qubit, and the first superconducting qubit and the second superconducting qubit in each superconducting qubit coupling apparatus both include two ungrounded electrodes. In the superconducting quantum chip, the shared superconducting qubit is first superconducting qubits or second superconducting qubits in the two adjacent superconducting qubit coupling apparatuses. Alternatively, the shared superconducting qubit is a first superconducting qubit in one of the two adjacent superconducting qubit coupling apparatuses, and the shared superconducting qubit is a second superconducting qubit in the other of the two adjacent superconducting qubit coupling apparatuses.

In other words, if a tunable coupling module, a first coupling module, and a second coupling module in each superconducting qubit coupling apparatus are collectively referred to as a coupler, every two adjacent superconducting qubits in the superconducting quantum chip are coupled via a coupler. In addition, for any superconducting qubit, the superconducting qubit may serve as a first superconducting qubit or a second superconducting qubit. Therefore, for this embodiment, only one type of superconducting qubit needs to be designed. The type of superconducting qubit is placed in different positions to serve as a first superconducting qubit or a second superconducting qubit. As such, the superconducting quantum chip provides good overall symmetry.

According to a third aspect, an embodiment of this application provides a superconducting quantum chip. The superconducting quantum chip includes a plurality of superconducting qubit coupling apparatuses according to any one of the implementations of the first aspect. The plurality of superconducting qubit coupling apparatuses are distributed in an array, and every two adjacent superconducting qubit coupling apparatuses share one superconducting qubit. The first superconducting qubit in each superconducting qubit coupling apparatus includes a first electrode and a second electrode, neither the first electrode nor the second electrode is grounded, the first electrode includes two interconnected sub-electrodes, the second electrode includes two interconnected sub-electrodes, and the two sub-electrodes of the first electrode and the two sub-electrodes of the second electrode cross. The shared superconducting qubit is first superconducting qubits or second superconducting qubits in the two adjacent superconducting qubit coupling apparatuses.

For this embodiment, the two electrodes of the first superconducting qubit are designed as four sub-electrodes that cross, ensuring that each of superconducting qubit coupling apparatuses sharing the first superconducting qubit can utilize a group of a sub-electrode 1 and a sub-electrode 2 of the four sub-electrodes. As such, the superconducting quantum chip provides good overall symmetry.

According to a fourth aspect, an embodiment of this application provides a quantum computer. The quantum computer includes a dilution refrigerator, a measurement and control system, and the superconducting quantum chip according to the third aspect or the fourth aspect.

It can be learned from the foregoing technical solutions that embodiments of this application have the following advantages.

The superconducting qubit coupling apparatus provided in this application includes the first superconducting qubit, the second superconducting qubit, the first coupling module, the second coupling module, and the tunable coupling module. The tunable coupling module includes the first resonant circuit and the second resonant circuit. The frequency of at least one of the first resonant circuit and the second resonant circuit is tunable. According to this application, the following is implemented through design: The strength of the coupling between the first resonant circuit and the first superconducting qubit and the strength of the coupling between the second resonant circuit and the first superconducting qubit are of opposite signs, and the absolute values of the coupling strengths are the same or close; and the strength of the coupling between the first resonant circuit and the second superconducting qubit and the strength of the coupling between the second resonant circuit and the second superconducting qubit are of opposite signs, and the coupling strengths are the same or close. Therefore, when the frequency of the first resonant circuit and the frequency of the second resonant circuit are the same or close, the coupling between the first superconducting qubit and the second superconducting qubit is turned off. It can be learned that in this application, only one tuning is needed to turn off the coupling between the first superconducting qubit and the second superconducting qubit. In addition, the coupling turning-off is unrelated to the frequencies of the two superconducting qubits, simplifying the manner of tuning for turning off the coupling between the two superconducting qubits. In other words, regardless of how the frequencies of the superconducting qubits change in the subsequent process, the bias point of the tunable coupling module does not need to be changed, implementing turning-off of the coupling between the two superconducting qubits across the entire frequency band. Even if the frequency of a superconducting qubit changes due to a transition to a high energy level, the coupling between the two superconducting qubits can still be turned off, helping suppress leakage into a high energy level, and improving fidelity of logic gates during parallel implementation of the logic gates in the superconducting qubit coupling apparatus. In addition, because turning-off of the coupling between the two superconducting qubits is unrelated to the frequencies of the two superconducting qubits, a larger degree of freedom is provided for frequency allocation for a plurality of superconducting qubits. Moreover, when gate operations are implemented in parallel on a plurality of bits, there is no coupling leakage problem. Therefore, high-fidelity multi-bit gates can be implemented in parallel.

**BRIEF DESCRIPTION OF DRAWINGS**

FIG. 1 is a diagram of a structure of a quantum computer;
FIG. 2 is a diagram of a first structure of a superconducting qubit coupling apparatus according to an embodiment of this application;
FIG. 3 is a diagram of several structures of a first superconducting qubit according to an embodiment of this application;
FIG. 4 is a diagram of a structure of a first coupling module according to an embodiment of this application;
FIG. 5(a) is a diagram of a second structure of a superconducting qubit coupling apparatus according to an embodiment of this application;
FIG. 5(b) is a diagram of a third structure of a superconducting qubit coupling apparatus according to an embodiment of this application;
FIG. 6 is a diagram of several structures of a second superconducting qubit according to an embodiment of this application;
FIG. 7 is a diagram of a first implementation of a tunable coupling module according to an embodiment of this application;
FIG.8 is a diagram of several structures of a tunable coupler and a fixed coupler according to an embodiment of this application;
FIG. 9 is a diagram of a first structure of a second coupling module according to an embodiment of this application;
FIG. 10 is a diagram of a second implementation of a tunable coupling module according to an embodiment of this application;
FIG. 11 is a diagram of a second structure of a second coupling module according to an embodiment of this application;
FIG. 12 is a diagram of a first structure of a superconducting quantum chip according to an embodiment of this application; and
FIG. 13 is a diagram of a second structure of a superconducting quantum chip according to an embodiment of this application.

**DESCRIPTION OF EMBODIMENTS**

Embodiments of this application provide a superconducting qubit coupling apparatus, a superconducting quantum chip, and a quantum computer, simplifying a manner of tuning for turning off coupling between two superconducting qubits, implementing turning-off of the coupling between the two superconducting qubits across an entire frequency band, and providing a larger degree of freedom for frequency allocation for a plurality of superconducting qubits. In addition, this design helps suppress leakage into a high energy level, and improves fidelity of logic gates during parallel implementation of the logic gates in the superconducting qubit coupling apparatus.

It should be noted that, in this specification, the claims, and the accompanying drawings of this application, terms "first", "second", and the like (if existent) are intended to distinguish between similar objects but do not necessarily indicate a specific order or sequence. It should be understood that the data used in such a way are interchangeable in appropriate circumstances, so that embodiments described herein can be implemented in an order other than the content illustrated or described herein. In addition, terms "include", "have", and any variations thereof are intended to cover non-exclusive inclusions. For example, a process, method, system, product, or device that includes a series of steps or units is not necessarily limited to those clearly listed steps or units, but may include other steps or units that are not clearly listed or are inherent to such a process, method, product, or device.

This application may be mainly applied to superconducting quantum computing scenarios. Superconducting quantum computing is a quantum computing solution that is based on superconducting circuits. The superconducting circuits are microwave circuits that include basic components such as capacitors, inductors, transmission lines, and Josephson junctions. A superconducting circuit chip operates in an ultra-low-temperature environment provided by a dilution refrigerator, to achieve superconductivity. Superconducting quantum circuits are highly compatible with a conventional integrated circuit technology in aspects such as design, production, and measurement, and can implement quite flexible design and control for energy levels of and coupling between qubits, demonstrating significant potential for large-scale deployment. The following describes a quantum computer in a superconducting quantum computing scenario.

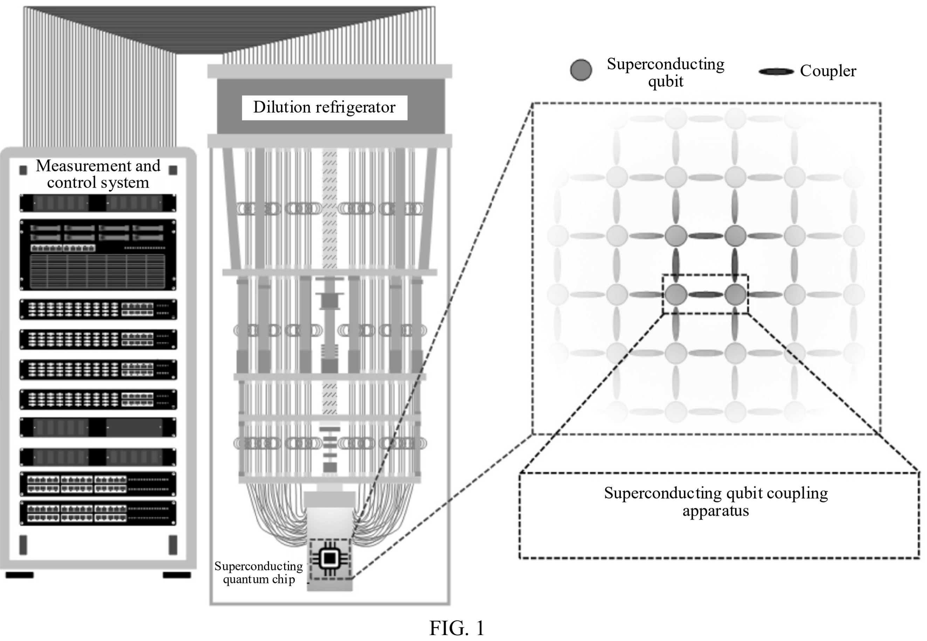

FIG. 1 is a diagram of a structure of a quantum computer. As shown in FIG. 1, the quantum computer includes: a dilution refrigerator configured to provide a low-temperature environment, a superconducting quantum chip configured to implement quantum computing information carriers, and a measurement and control system configured to manipulate qubit states for computation operations and to read out qubit states. The superconducting quantum chip is placed in the low-temperature environment. The measurement and control system controls a microwave source and modulated pulse signals based on requirements of computation operations, and inputs a series of microwave pulse sequences into the superconducting quantum chip to manipulate quantum states of bits. After all operations are completed, the measurement and control system outputs measurement pulse signals into the superconducting quantum chip, and obtains states of the superconducting qubits based on signals returned, to obtain a computation result. Further, as shown in FIG. 1, the superconducting quantum chip includes a plurality of superconducting qubit coupling apparatuses that are arranged in a two-dimensional array. Each superconducting qubit coupling apparatus includes two superconducting qubits and a coupler located between the two superconducting qubits. The superconducting qubits are superconducting resonant circuits including nonlinear components. It should be understood that the arrangement of a two-dimensional array shown in FIG. 1 is merely a specific example. During actual application, other forms of arrangement may be alternatively adopted for the superconducting quantum chip, for example, a triangular array and a hexagonal grid array. This is not specifically limited herein. The following describes the superconducting qubit coupling apparatus in detail.

It should be noted that in some conventional solutions, two superconducting qubits are coupled via a conventional tunable coupler. An equivalent strength of coupling between the two superconducting qubits is expressed as:

$$g_{eff} = \frac{g_1 g_2}{2}\left(\frac{1}{\omega_1 - \omega_c} + \frac{1}{\omega_2 - \omega_c}\right) + g_{12}$$ , where $g_{12}$ represents a strength of direct coupling between the two superconducting qubits. When $g_{12}$ is positive, frequencies $\omega_1$ and $\omega_2$ of the two superconducting qubits are tuned to be lower than a frequency $\omega_c$ of the tunable coupler, that is, $\omega_1 < \omega_c$ and $\omega_2 < \omega_c$. In this way, the two terms in the foregoing expression can cancel each other out by tuning $\omega_c$, implementing turning-off of the coupling between the two superconducting qubits. However, we find that cancellation of the two terms in the foregoing expression is related to both the frequencies of the two superconducting qubits and the frequency of the tunable coupler. If the frequency of a superconducting qubit changes or a superconducting qubit experiences leakage into a high energy level, the coupling turning-off condition cannot be met. This characteristic poses severe challenges to both automatic multi-bit calibration and parallel implementation of gates.

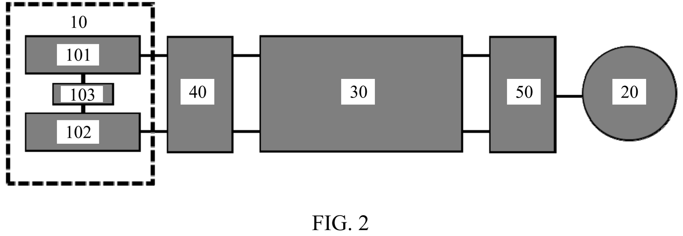

FIG. 2 is a diagram of a first structure of a superconducting qubit coupling apparatus according to an embodiment of this application. As shown in FIG. 2, the superconducting qubit coupling apparatus includes a first superconducting qubit 10, a second superconducting qubit 20, a tunable coupling module 30, a first coupling module 40, and a second coupling module 50. The tunable coupling module 30 is coupled to the first superconducting qubit 10 via the first coupling module 40, and the tunable coupling module 30 is coupled to the first superconducting qubit 20 via the second coupling module 50. The tunable coupling module 30 includes a first resonant circuit and a second resonant circuit, and a frequency of at least one of the resonant circuits in the tunable coupling module 30 is tunable.

It should be noted that the superconducting qubit coupling apparatus designed in this application implements that turning-off of coupling between the two superconducting qubits is unrelated to frequencies of the two superconducting qubits. Specifically, a strength of coupling between the first resonant circuit of the tunable coupling module 30 and the first superconducting qubit 10 and a strength of coupling between the second resonant circuit of the tunable coupling module 30 and the first superconducting qubit 10 are of opposite signs, and an absolute difference between an absolute value of the strength of the coupling between the first resonant circuit of the tunable coupling module 30 and the first superconducting qubit 10 and an absolute value of the strength of the coupling between the second resonant circuit of the tunable coupling module 30 and the first superconducting qubit 10 is less than a first preset value. In addition, a strength of coupling between the first resonant circuit of the tunable coupling module 30 and the second superconducting qubit 20 and a strength of coupling between the second resonant circuit of the tunable coupling module 30 and the second superconducting qubit 20 are of a same sign, and an absolute difference between the strength of the coupling between the first resonant circuit of the tunable coupling module 30 and the first superconducting qubit 10 and the strength of the coupling between the second resonant circuit of the tunable coupling module 30 and the first superconducting qubit 10 is less than the first preset value. For example, the first preset value may be 50 MHz.

In short, a condition for turning off the coupling between the two superconducting qubits is as follows: The strength of the coupling between one of the two resonant circuits of the tunable coupling module 30 and the first superconducting qubit 10 and the strength of the coupling between the other and the first superconducting qubit 10 are of opposite signs, and magnitudes of the coupling strengths are the same or close; and the strength of the coupling between one of the two resonant circuits of the tunable coupling module 30 and the second superconducting qubit 20 and the strength of the coupling between the other and the second superconducting qubit 20 are of a same sign, and magnitudes of the coupling strengths are the same or close. An equivalent strength of the coupling between the first superconducting qubit 10 and the second superconducting qubit 20 is expressed as:

$$g_{eff} = \frac{g_1 g_2}{2}\left(\frac{1}{\Delta_{1c1}} + \frac{1}{\Delta_{2c1}}\right) - \frac{g_1 g_2}{2}\left(\frac{1}{\Delta_{1c2}} + \frac{1}{\Delta_{2c2}}\right) = \frac{g_1 g_2}{2}\left(\frac{1}{\Delta_{1c1}\Delta_{1c2}} + \frac{1}{\Delta_{2c1}\Delta_{2c2}}\right)(\omega_{c1} - \omega_{c2}).$$

In the expression, $\Delta_{icj} = \omega_i - \omega_{cj}$ represents detuning between an $i$th superconducting qubit and a $j$th resonant circuit, $g_i$ is the absolute strength of the coupling between the two resonant circuits and the $i$th superconducting qubit, $\omega_{c1}$ represents a frequency of the first resonant circuit, and $\omega_{c2}$ represents a frequency of the second resonant circuit. It can be learned that, when $\omega_{c1} = \omega_{c2}$, $g_{eff}$ is equal to 0 unconditionally, that is, turning-off of the coupling between the two superconducting qubits is unrelated to the frequencies of the two superconducting qubits. A frequency of a superconducting qubit may be understood as a frequency difference between two information storage states (for example, a state 0 and a state 1) of the superconducting qubit. It should be understood that during actual application, it is also acceptable that $\omega_{c1}$ and $\omega_{c2}$ are close to each other but not exactly the same, that is, an absolute difference between $\omega_{c1}$ and $\omega_{c2}$ is less than a second preset value. For example, the second preset value may be 500 MHz. Further, coupling between two superconducting qubits being turned off may be understood as a strength of the coupling between the two superconducting qubits being less than a specific threshold.

It should be noted that in this application, the frequency of the first resonant circuit and the frequency of the second resonant circuit being the same or close is implemented through tuning, equivalent to that only one calibration is needed. In a subsequent process, regardless of how the frequencies of the superconducting qubits change, a bias point of the tunable coupling module does not need to be changed, implementing turning-off of the coupling between the two superconducting qubits across an entire frequency band. In other words, even if the frequency of a superconducting qubit changes due to a transition to a high energy level, the coupling between the two superconducting qubits can still be turned off, helping suppress leakage into a high energy level, and improving fidelity of logic gates during parallel implementation of the logic gates in the superconducting qubit coupling apparatus. In addition, because turning-off of the coupling between the two superconducting qubits is unrelated to the frequencies of the two superconducting qubits, a larger degree of freedom is provided for frequency allocation for a plurality of superconducting qubits. Moreover, when gate operations are implemented in parallel on a plurality of bits, there is no coupling leakage problem. Therefore, high-fidelity multi-bit gates can be implemented in parallel.

It should be understood that design in this application can implement the following: When the frequency of the first resonant circuit and the frequency of the second resonant circuit are the same or close, an impedance of the first resonant circuit and an impedance of the second resonant circuit are the same or close, meeting the coupling turning-off condition. Accordingly, the components in the superconducting qubit coupling apparatus need to be designed in a targeted manner. The following separately describes the components in detail.

For the first superconducting qubit 10, as shown in FIG. 2, the first superconducting qubit 10 includes an electrode 101, an electrode 102, and an inductor circuit 103. The electrode 101 is connected to the electrode 102 by the inductor circuit 103. Neither the electrode 101 nor the electrode 102 is grounded. The first superconducting qubit 10 may also be referred to as a two-electrode floating superconducting qubit. The inductor circuit 103 may be an inductor circuit including several linear inductors and several Josephson junctions that are connected in series, in parallel, or in a combination of series and parallel.

It should be understood that, to meet that the strength of the coupling between one of the two resonant circuits of the tunable coupling module 30 and the first superconducting qubit 10 and the strength of the coupling between the other and the first superconducting qubit 10 are of opposite signs, and that magnitudes of the coupling strengths are the same or close, which are in the coupling turning-off condition, the first resonant circuit is coupled to the electrode 101 via the first coupling module 40, the second resonant circuit is coupled to the electrode 102 via the first coupling module 40, and when the first superconducting qubit 10 is in a resonant state, a voltage across the electrode 101 and a voltage across the electrode 102 are of opposite signs. The first superconducting qubit 10 being in the resonant state may also be referred to as the first superconducting qubit 10 being in an excited state. In addition, an absolute difference between a capacitance to ground of the first electrode 101 and a capacitance to ground of the second electrode 102 is less than a third preset value. For example, the third preset value may be 50 fF.

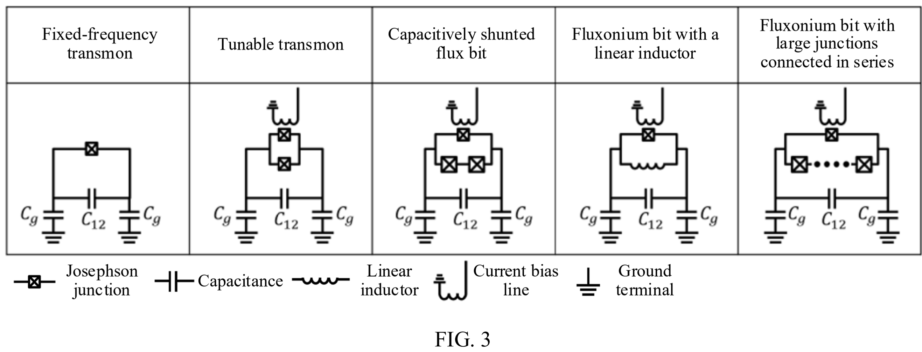

FIG. 3 is a diagram of several structures of the first superconducting qubit according to the embodiment of this application. As shown in FIG. 3, types of the first superconducting qubit 10 include fixed-frequency transmon, tunable transmon, capacitively shunted flux bit, fluxonium bit with a linear inductor, and fluxonium bit with large junctions connected in series. A fixed-frequency transmon offers a long dephasing time, but its frequency is not tunable. For a tunable transmon, its frequency is tunable, but its dephasing time is relatively shorter. An anharmonicity of a capacitively shunted flux qubit can be tuned to be positive. For the two types of fluxonium bits, their frequencies are low, but their anharmonicities are usually large and their coherence times are long. It can be learned that the first superconducting qubits each include two ungrounded electrodes regardless of the type, and the types of the first superconducting qubit 10 depend on different inductor circuits. Usually, in FIG. 3, magnitudes of all capacitances are in a range of 1 fF to 50 pF, and magnitudes of all inductances (including Josephson junctions and linear inductors) are in a range of 0.1 nH to 200 nH.

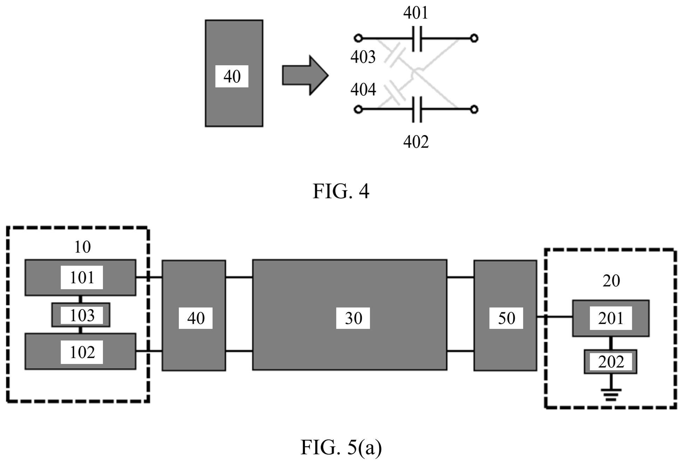

FIG. 4 is a diagram of a structure of the first coupling module according to the embodiment of this application. As shown in FIG. 4, the first coupling module includes a capacitance 401 and a capacitance 402. The first resonant circuit of the tunable coupling module 30 is coupled to the electrode 101 of the first superconducting qubit 10 via the capacitance 401, and the second resonant circuit of the tunable coupling module 30 is coupled to the electrode 102 of the first superconducting qubit 10 via the capacitance 402. A difference between the capacitance 401 and the capacitance 402 is less than the third preset value. Based on this, a parasitic capacitance 403 in the first coupling module is located between the first resonant circuit and the electrode 102, a parasitic capacitance 404 in the first coupling module is located between the second resonant circuit and the electrode 101, and an absolute difference between the parasitic capacitance 403 and the parasitic capacitance 404 is less than the third preset value.

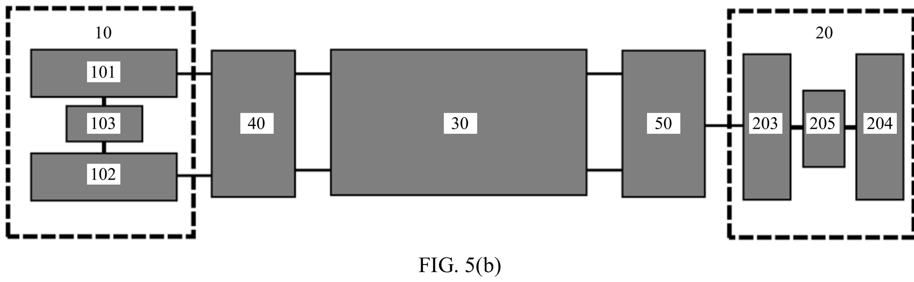

FIG. 5(a) is a diagram of a second structure of the superconducting qubit coupling apparatus according to the embodiment of this application. FIG. 5(b) is a diagram of a third structure of the superconducting qubit coupling apparatus according to the embodiment of this application. For the second superconducting qubit 20, for example, the second superconducting qubit 20 may be of a single-electrode grounded structure shown in FIG. 5(a). To be specific, the second superconducting qubit 20 includes an electrode 201 and an inductor circuit 202, and the first resonant circuit and the second resonant circuit of the tunable coupling module 30 are separately coupled to the electrode 201 via the second coupling module 40. For another example, the second superconducting qubit 20 may be of a two-electrode floating structure shown in FIG. 5(b). To be specific, the second superconducting qubit 20 includes an electrode 203, an electrode 204, and an inductor circuit 205, and the electrode 203 and the electrode 204 are connected by the inductor circuit 205. To meet that the strength of the coupling between one of the two resonant circuits of the tunable coupling module 30 and the second superconducting qubit 20 and the strength of the coupling between the other and the second superconducting qubit 20 are of a same sign, and that magnitudes of the coupling strengths are the same or close, which are in the coupling turning-off condition, the first resonant circuit and the second resonant circuit of the tunable coupling module 30 are separately coupled to one of the electrodes of the second superconducting qubit 20, for example, the electrode 203, via the second coupling module 40.

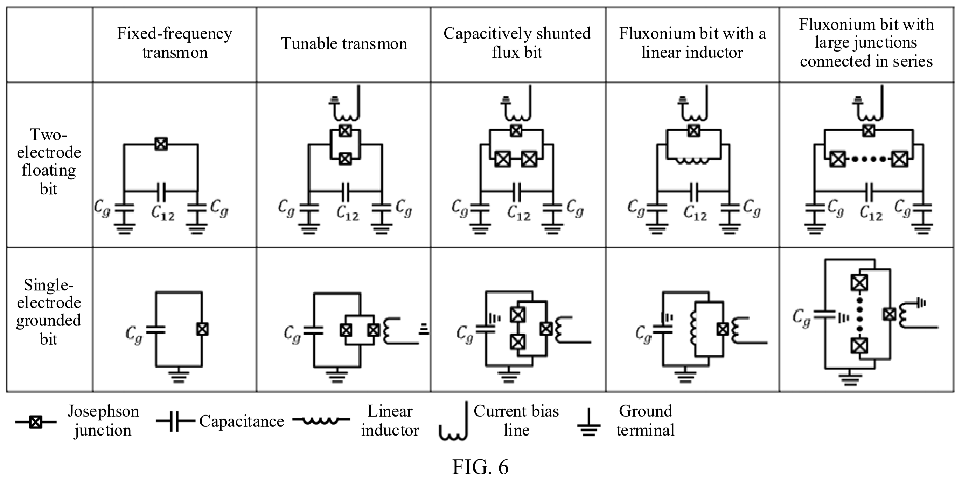

FIG. 6 is a diagram of several structures of the second superconducting qubit according to the embodiment of this application. As shown in FIG. 6, regardless of whether the second superconducting qubit 20 is of the single-electrode grounded structure or the two-electrode floating structure, types of the second superconducting qubit 20 include fixed-frequency transmon, tunable transmon, capacitively shunted flux bit, fluxonium bit with a linear inductor, and fluxonium bit with large junctions connected in series. A fixed-frequency transmon offers a long dephasing time, but its frequency is not tunable. For a tunable transmon, its frequency is tunable, but its dephasing time is relatively shorter. An anharmonicity of a capacitively shunted flux qubit can be tuned to be positive. For the two types of fluxonium bits, their frequencies are low, but their anharmonicities are usually large and their coherence times are long. It can be learned that the types of the second superconducting qubit 20 depend on different inductor circuits. Usually, in FIG. 5, magnitudes of all capacitances are in a range of 1 fF to 50 pF, and magnitudes of all inductances (including Josephson junctions and linear inductors) are in a range of 0.1 nH to 200 nH.

It should be noted that the tunable coupling module 30 is a circuit including a capacitance, an inductor, a transmission line, or a combination thereof. In addition, the tunable coupling module 30 further includes a tunable inductor and/or a tunable capacitance. The following describes several possible implementations of the tunable coupling module 30.

In a possible implementation, the tunable coupling module 30 includes two independent single-mode circuits, with a plurality of options for each independent single-mode circuit. For example, an independent single-mode circuit is a fixed coupler or a tunable coupler.

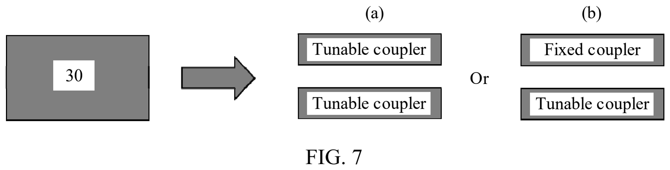

FIG. 7 is a diagram of a first implementation of the tunable coupling module according to the embodiment of this application. As shown in (a) in FIG. 7, for example, the first resonant circuit and the second resonant circuit of the tunable coupling module 30 are both tunable couplers. To be specific, the frequencies of the first resonant circuit and the second resonant circuit are both tunable. As shown in (b) in FIG. 7, for another example, the first resonant circuit of the tunable coupling module 30 is a tunable coupler, while the second resonant circuit of the tunable coupling module 30 is a fixed coupler. To be specific, the frequency of the first resonant circuit is tunable, while the frequency of the second resonant circuit is fixed. It should be understood that for a tunable coupler, the tunable coupler includes a tunable inductor and/or a tunable capacitance, the tunable coupler further includes a bias line, and the bias line is configured to tune a magnitude of the tunable inductor and/or a magnitude of the tunable capacitance.

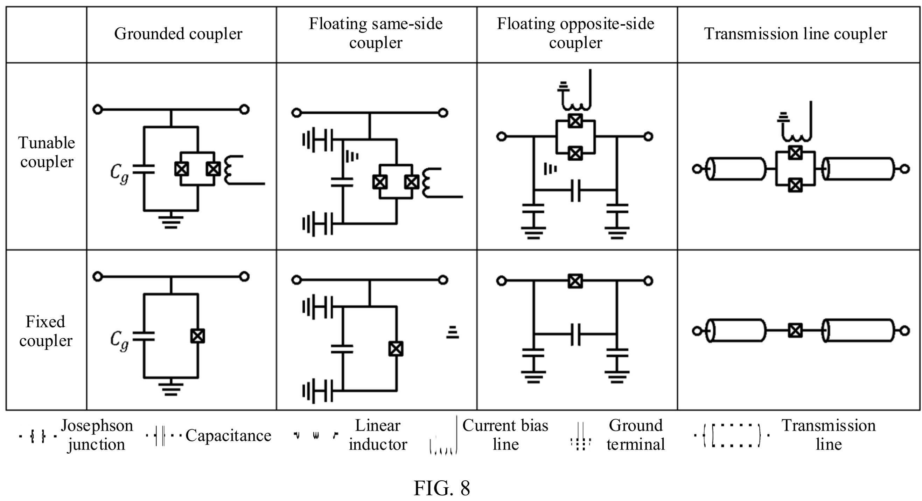

FIG. 8 is a diagram of several structures of the tunable coupler and the fixed coupler according to the embodiment of this application. As shown in FIG. 8, for the tunable coupler and the fixed coupler, they are both available in the following specific types: grounded coupler, floating same-side coupler, floating opposite-side coupler, and transmission line coupler. Usually, in FIG. 8, magnitudes of all capacitances are in a range of 1 fF to 50 pF, magnitudes of all inductances (including Josephson junctions and linear inductors) are in a range of 0.1 nH to 200 nH, characteristic impedances of all transmission lines are in a range of 1 $\Omega$ to 1000 $\Omega$, and lengths of the transmission lines are in a range of 100 $\mu$m to 100 mm. It should be understood that, when couplers of the two floating types or the transmission line type in FIG. 8 are selected, specific dimensions of the couplers can become larger, helping increase a distance between two superconducting qubits, increasing wiring space, and further improving scalability. In addition, a longer coupler can also be used for long-distance coupling across chips.

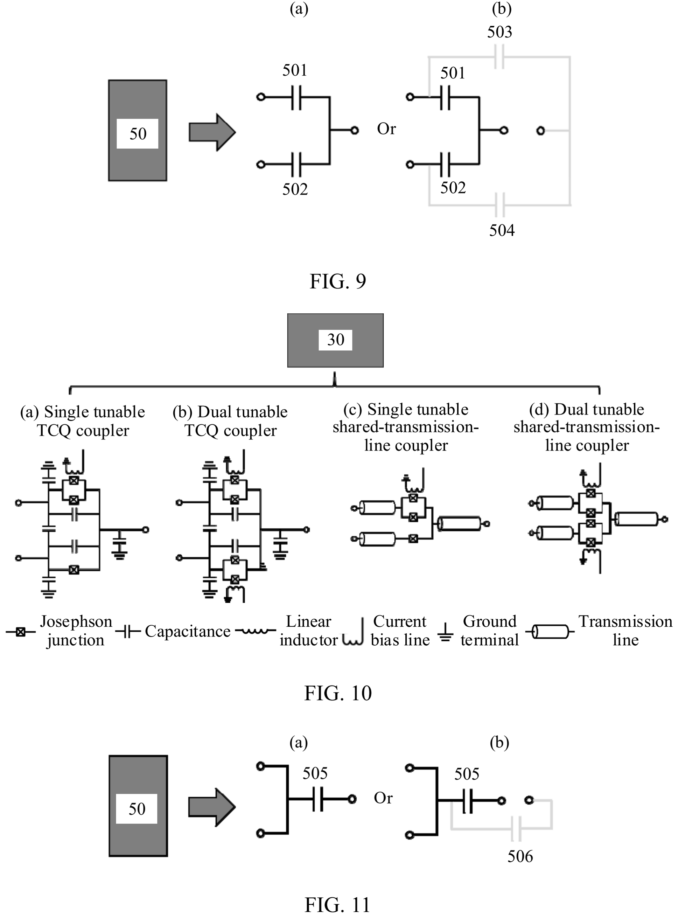

FIG. 9 is a diagram of a first structure of the second coupling module according to the embodiment of this application. It should be understood that, if the tunable coupling module 30 is of the implementation shown in FIG. 7, the second coupling module 50 is of the structure shown in FIG. 9. Specifically, the second coupling module 50 includes a capacitance 501 and a capacitance 502. The first resonant circuit of the tunable coupling module 30 is coupled to one of the electrodes of the second superconducting qubit 20 via the capacitance 501, and the second resonant circuit of the tunable coupling module 30 is coupled to one of the electrodes of the second superconducting qubit 20 via the capacitance 502. An absolute difference between the capacitance 501 and the capacitance 502 is less than the third preset value, to meet the following that is in the coupling turning-off condition: The strength of the coupling between one of the two resonant circuits of the tunable coupling module 30 and the second superconducting qubit 20 and the strength of the coupling between the other and the second superconducting qubit 20 are of a same sign, and magnitudes of the coupling strengths are the same or close.

For example, if the second superconducting qubit 20 is of the single-electrode grounded structure shown in FIG. 5(a), the second coupling module 50 is of a structure shown in (a) in FIG. 9. The first resonant circuit of the tunable coupling module 30 is coupled to the electrode 201 of the second superconducting qubit 20 via the capacitance 501, and the second resonant circuit of the tunable coupling module 30 is coupled to the electrode 201 of the second superconducting qubit 20 via the capacitance 502.

For another example, if the second superconducting qubit 20 is of the two-electrode floating structure shown in FIG. 5(b), the second coupling module 50 is of a structure shown in (b) in FIG. 9. The first resonant circuit of the tunable coupling module 30 is coupled to the electrode 203 of the second superconducting qubit 20 via the capacitance 501, and the second resonant circuit of the tunable coupling module 30 is coupled to the electrode 203 of the second superconducting qubit 20 via the capacitance 502. In this example, the second coupling module 50 further includes a parasitic capacitance 503 that is located between the first resonant circuit and the electrode 204, and a parasitic capacitance 504 that is located between the second resonant circuit and the electrode 204. An absolute difference between the two parasitic capacitances is less than the third preset value, to meet the following that is in the coupling turning-off condition: The strength of the coupling between one of the two resonant circuits of the tunable coupling module 30 and the second superconducting qubit 20 and the strength of the coupling between the other and the second superconducting qubit 20 are of a same sign, and magnitudes of the coupling strengths are the same or close.

In another possible implementation, the first resonant circuit and the second resonant circuit of the tunable coupling module 30 have a shared circuit structure, and the shared circuit structure is coupled to the second superconducting qubit 20 via the second coupling module 50.

FIG. 10 is a diagram of a second implementation of the tunable coupling module according to the embodiment of this application. As shown in FIG. 10, several specific designs of the tunable coupling module 30 are provided. For example, the tunable coupling module 30 is a single tunable TCQ (Tunable coupling qubit) coupler shown in (a) in FIG. 10, a dual tunable TCQ coupler shown in (b) in FIG. 10, a single tunable shared-transmission-line coupler shown in (c) in FIG. 10, or a dual tunable shared-transmission-line coupler shown in (d) in FIG. 10. It can be learned that each circuit structure shown in FIG. 10 includes three nodes, with two nodes located on a same side and another node located on the other side, the two nodes located on the same side are coupled to the first superconducting qubit 10 via the first coupling module 40, and the node located on the other side is coupled to the second superconducting qubit 20 via the second coupling module 50. It should be understood that a part of a circuit connected to the node located on the other side is the circuit structure shared by the first resonant circuit and the second resonant circuit in the tunable coupling module 30. It should be noted that, for the couplers of the single tunable type shown in (a) and (c) in FIG. 10, a frequency of only one resonant circuit in a coupler is tunable, and for the couplers of the dual tunable type shown in (b) and (d) in FIG. 10, frequencies of two resonant circuits in a coupler are both tunable.

Usually, in FIG. 10, magnitudes of all capacitances are in a range of 1 fF to 50 pF, magnitudes of all inductances (including Josephson junctions and linear inductors) are in a range of 0.1 nH to 200 nH, characteristic impedances of all transmission lines are in a range of 1 $\Omega$ to 1000 $\Omega$, and lengths of the transmission lines are in a range of 100 $\mu$m to 100 mm. It should be understood that, when couplers of the floating types shown in (a) and (b) in FIG. 10 or couplers of the transmission line types shown in (c) and (d) in FIG. 10 are selected, specific dimensions of the couplers can become larger, helping increase a distance between two superconducting qubits, increasing wiring space, and further improving scalability.

FIG. 11 is a diagram of a second structure of the second coupling module according to the embodiment of this application. It should be understood that, if the tunable coupling module 30 is of the implementation shown in FIG. 10, the second coupling module 50 is of the structure shown in FIG. 11. Specifically, the second coupling module 50 includes a capacitance 505. The first resonant circuit and the second resonant circuit of the tunable coupling module 30 are both coupled to one of the electrodes of the second superconducting qubit 20 via the capacitance 505. In other words, because the first resonant circuit and the second resonant circuit of the tunable coupling module 30 have the shared circuit structure, the shared circuit structure is used to be coupled to one of the electrodes of the second superconducting qubit 20 via a single capacitance, to meet the following that is in the coupling turning-off condition: The strength of the coupling between one of the two resonant circuits of the tunable coupling module 30 and the second superconducting qubit 20 and the strength of the coupling between the other and the second superconducting qubit 20 are of a same sign, and magnitudes of the coupling strengths are the same or close. Compared with the implementation shown in FIG. 9, the implementation shown in FIG. 11 meets the coupling turning-off condition more easily.

For example, if the second superconducting qubit 20 is of the single-electrode grounded structure shown in FIG. 5(a), the second coupling module 50 is of a structure shown in (a) in FIG. 11. The first resonant circuit and the second resonant circuit of the tunable coupling module 30 are both coupled to the electrode 201 of the second superconducting qubit 20 via the capacitance 505.

For another example, if the second superconducting qubit 20 is of the two-electrode floating structure shown in FIG. 5(b), the second coupling module 50 is of a structure shown in (b) in FIG. 11. The first resonant circuit and the second resonant circuit of the tunable coupling module 30 are both coupled to the electrode 203 of the second superconducting qubit 20 via the capacitance 505. In this example, the second coupling module 50 further includes a parasitic capacitance 506 that is located between the electrode 204 and the circuit structure shared by the first resonant circuit and the second resonant circuit. The parasitic capacitance 506 is less than the capacitance 503, to meet the following that is in the coupling turning-off condition: The strength of the coupling between one of the two resonant circuits of the tunable coupling module 30 and the second superconducting qubit 20 and the strength of the coupling between the other and the second superconducting qubit 20 are of a same sign, and magnitudes of the coupling strengths are the same or close.

It should be noted that, based on the superconducting qubit coupling apparatus described above, a plurality of superconducting qubit coupling apparatuses are arranged in a two-dimensional array, to form a superconducting quantum chip. The following describes possible distributions of the superconducting qubit coupling apparatuses in the superconducting quantum chip. It should be understood that, because a square grid array is most widely used, the following mainly provides implementations used for arrangement of a square grid array.

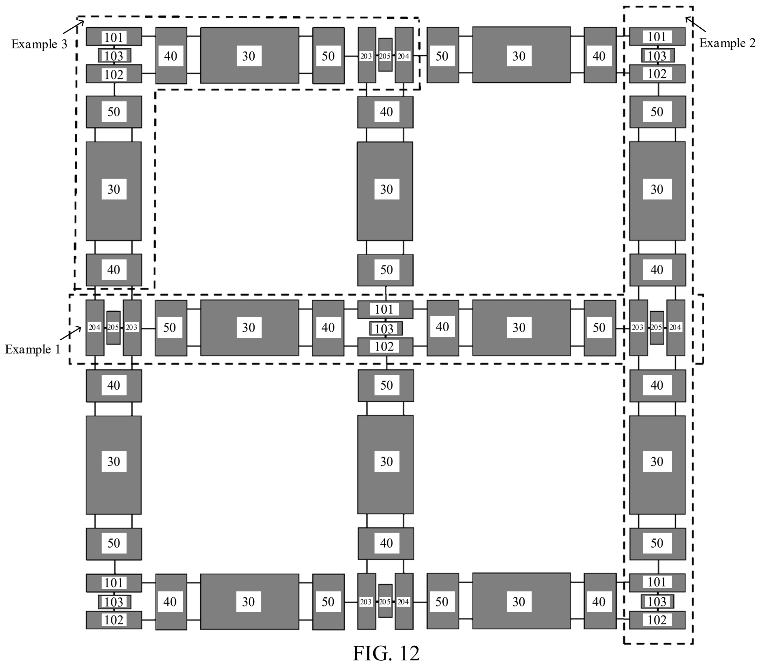

FIG. 12 is a diagram of a first structure of a superconducting quantum chip according to an embodiment of this application. As shown in FIG. 12, each superconducting qubit coupling apparatus in the superconducting quantum chip is of the structure shown in FIG. 5(b), that is, a first superconducting qubit and a second superconducting qubit are both of a two-electrode floating design. It can be learned that every two adjacent superconducting qubit coupling apparatuses share one superconducting qubit. For example, as shown by an example 1 in FIG. 12, two adjacent superconducting qubit coupling apparatuses share a first superconducting qubit. For another example, as shown by an example 2 in FIG. 12, two adjacent superconducting qubit coupling apparatuses share a second superconducting qubit. For still another example, as shown by an example 3 in FIG. 12, a superconducting qubit shared by two adjacent superconducting qubit coupling apparatuses is a first superconducting qubit in one of the superconducting qubit coupling apparatuses, and is a second superconducting qubit in the other of the superconducting qubit coupling apparatuses. In other words, if a tunable coupling module 30, a first coupling module 40, and a second coupling module 50 in each superconducting qubit coupling apparatus are collectively referred to as a coupler, every two adjacent superconducting qubits in the superconducting quantum chip are coupled via a coupler. In addition, for any superconducting qubit, the superconducting qubit may serve as a first superconducting qubit or a second superconducting qubit. Therefore, for this embodiment, only one type of superconducting qubit needs to be designed. The type of superconducting qubit is placed in different positions to serve as a first superconducting qubit or a second superconducting qubit. As such, the superconducting quantum chip provides good overall symmetry.

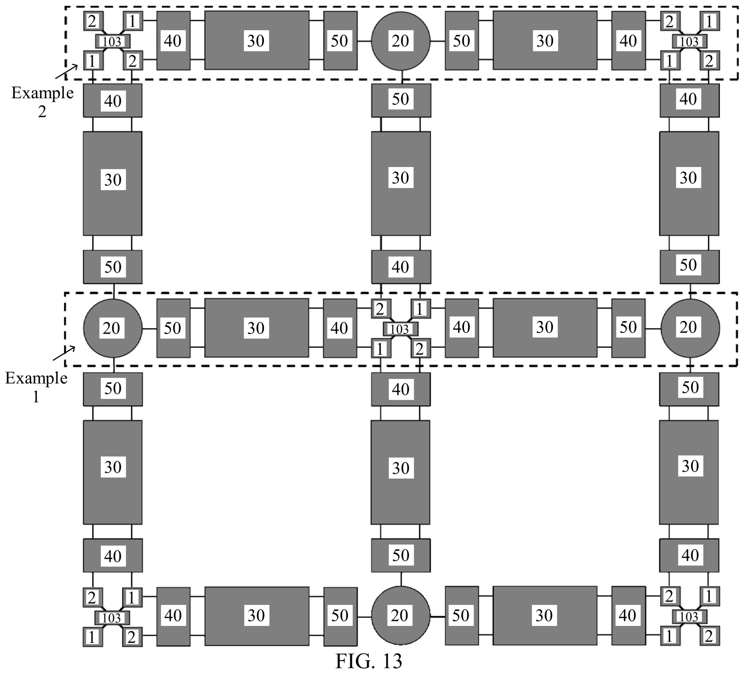

FIG. 13 is a diagram of a second structure of a superconducting quantum chip according to an embodiment of this application. As shown in FIG. 13, a first superconducting qubit is of a two-electrode floating design. It should be noted that a first electrode 101 of the first superconducting qubit includes two interconnected sub-electrodes 1 that cross, a second electrode 102 of the first superconducting qubit includes two interconnected sub-electrodes 2 that cross, and a common intersection point of the two sub-electrodes 1 and the two sub-electrodes 2 is a point connected to an inductor circuit 103. It can be learned that every two adjacent superconducting qubit coupling apparatuses share one superconducting qubit. For example, as shown by an example 1 in FIG. 13, two adjacent superconducting qubit coupling apparatuses share a first superconducting qubit. For another example, as shown by an example 2 in FIG. 13, two adjacent superconducting qubit coupling apparatuses share a second superconducting qubit. It should be understood that a design of the second superconducting qubit is not limited in this embodiment. For example, the second superconducting qubit may be of a grounded or floating design. For this embodiment, the two electrodes of the first superconducting qubit are designed as four sub-electrodes that cross, ensuring that each of superconducting qubit coupling apparatuses sharing the first superconducting qubit can utilize a group of a sub-electrode 1 and a sub-electrode 2 of the four sub-electrodes. As such, the superconducting quantum chip provides good overall symmetry.

It should be noted that the foregoing embodiments are merely used to describe technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

**Claims**

1. A superconducting qubit coupling apparatus, comprising a first superconducting qubit, a second superconducting qubit, a first coupling module, a second coupling module, and a tunable coupling module, wherein the tunable coupling module is coupled to the first superconducting qubit via the first coupling module, the tunable coupling module is coupled to the second superconducting qubit via the second coupling module, the tunable coupling module comprises a first resonant circuit and a second resonant circuit, and a frequency of at least one of the first resonant circuit and the second resonant circuit is tunable;

   a strength of coupling between the first resonant circuit and the first superconducting qubit and a strength of coupling between the second resonant circuit and the first superconducting qubit are of opposite signs, and an absolute difference between an absolute value of the strength of the coupling between the first resonant circuit and the first superconducting qubit and an absolute value of the strength of the coupling between the second resonant circuit and the first superconducting qubit is less than a first preset value;
   a strength of coupling between the first resonant circuit and the second superconducting qubit and a strength of coupling between the second resonant circuit and the second superconducting qubit are of a same sign, and an absolute difference between the strength of the coupling between the first resonant circuit and the second superconducting qubit and the strength of the coupling between the second resonant circuit and the second superconducting qubit is less than the first preset value; and
   when an absolute difference between a frequency of the first resonant circuit and a frequency of the second resonant circuit is less than a second preset value, coupling between the first superconducting qubit and the second superconducting qubit is turned off.

2. The superconducting qubit coupling apparatus according to claim 1, wherein the first superconducting qubit comprises a first electrode and a second electrode, neither the first electrode nor the second electrode is grounded, and when the first superconducting qubit is in resonance, a voltage across the first electrode and a voltage across the second electrode are of opposite signs.

3. The superconducting qubit coupling apparatus according to claim 2, wherein the first electrode comprises a first capacitance to ground, the second electrode comprises a second capacitance to ground, and an absolute difference between the first capacitance to ground and the second capacitance to ground is less than a third preset value.

4. The superconducting qubit coupling apparatus according to claim 2 or 3, wherein the first electrode and the second electrode are connected by a first inductor circuit, and the first inductor circuit comprises at least one Josephson junction.

5. The superconducting qubit coupling apparatus according to any one of claims 2 to 4, wherein the first coupling module comprises a first capacitance and a second capacitance, the first resonant circuit is coupled to the first electrode via the first capacitance, the second resonant circuit is coupled to the second electrode via the second capacitance, and an absolute difference between the first capacitance and the second capacitance is less than the third preset value.

6. The superconducting qubit coupling apparatus according to any one of claims 2 to 5, wherein a first parasitic capacitance in the first coupling module is located between the first resonant circuit and the second electrode, a second parasitic capacitance in the first coupling module is located between the second resonant circuit and the first electrode, and an absolute difference between the first parasitic capacitance and the second parasitic capacitance is less than the third preset value.

7. The superconducting qubit coupling apparatus according to any one of claims 2 to 6, wherein the first resonant circuit and the second resonant circuit are both tunable couplers;
   or,
   the first resonant circuit is a tunable coupler, and the second resonant circuit is a fixed coupler.

8. The superconducting qubit coupling apparatus according to claim 7, wherein the second superconducting qubit comprises a third electrode, the third electrode is grounded through a second inductor circuit, the second inductor circuit comprises at least one Josephson junction, and the first resonant circuit and the second resonant circuit are separately coupled to the third electrode via the second coupling module.

9. The superconducting qubit coupling apparatus according to claim 8, wherein the second coupling module comprises a third capacitance and a fourth capacitance, the first resonant circuit is coupled to the third electrode of the second superconducting qubit via the third capacitance, the second resonant circuit is coupled to the third electrode of the second superconducting qubit via the fourth capacitance, and an absolute difference between the third capacitance and the fourth capacitance is less than the third preset value.

10. The superconducting qubit coupling apparatus according to claim 7, wherein the second superconducting qubit comprises a fourth electrode and a fifth electrode, neither the fourth electrode nor the fifth electrode is grounded, the fourth electrode and the fifth electrode are connected by a third inductor circuit, the third inductor circuit comprises at least one Josephson junction, and the first resonant circuit and the second resonant circuit are separately coupled to the fourth electrode via the second coupling module.

11. The superconducting qubit coupling apparatus according to claim 10, wherein the second coupling module comprises a third capacitance and a fourth capacitance, the first resonant circuit is coupled to the fourth electrode of the second superconducting qubit via the third capacitance, the second resonant circuit is coupled to the fourth electrode of the second superconducting qubit via the fourth capacitance, and an absolute difference between the third capacitance and the fourth capacitance is less than the third preset value.

12. The superconducting qubit coupling apparatus according to claim 10 or 11, wherein a third parasitic capacitance in the second coupling module is located between the first resonant circuit and the fifth electrode, a fourth parasitic capacitance in the second coupling module is located between the second resonant circuit and the fifth electrode, and an absolute difference between the third parasitic capacitance and the fourth parasitic capacitance is less than the third preset value.

13. The superconducting qubit coupling apparatus according to any one of claims 2 to 6, wherein the first resonant circuit and the second resonant circuit have a shared circuit structure.

14. The superconducting qubit coupling apparatus according to claim 13, wherein the second superconducting qubit comprises a third electrode, the third electrode is grounded through a second inductor circuit, the second inductor circuit comprises at least one Josephson junction, and the circuit structure shared by the first resonant circuit and the second resonant circuit is coupled to the third electrode via the second coupling module.

15. The superconducting qubit coupling apparatus according to claim 14, wherein the second coupling module comprises a fifth capacitance, and the circuit structure shared by the first resonant circuit and the second resonant circuit is coupled to the third electrode of the second superconducting qubit via the fifth capacitance.

16. The superconducting qubit coupling apparatus according to claim 13, wherein the second superconducting qubit comprises a fourth electrode and a fifth electrode, neither the fourth electrode nor the fifth electrode is grounded, the fourth electrode and the fifth electrode are connected by a third inductor circuit, the third inductor circuit comprises at least one Josephson junction, and the circuit structure shared by the first resonant circuit and the second resonant circuit is coupled to the fourth electrode via the second coupling module.

17. The superconducting qubit coupling apparatus according to claim 16, wherein the second coupling module comprises a fifth capacitance, and the circuit structure shared by the first resonant circuit and the second resonant circuit is coupled to the fourth electrode of the second superconducting qubit via the fifth capacitance.

18. The superconducting qubit coupling apparatus according to claim 16 or 17, wherein a fifth parasitic capacitance in the second coupling module is located between the fifth electrode and the circuit structure shared by the first resonant circuit and the second resonant circuit, and the fifth parasitic capacitance is less than the fifth capacitance.

19. The superconducting qubit coupling apparatus according to any one of claims 1 to 18, wherein at least one of the first resonant circuit and the second resonant circuit comprises a tunable inductor and/or a tunable capacitance, the at least one of the first resonant circuit and the second resonant circuit further comprises a bias line, and the bias line is configured to tune a magnitude of the tunable inductor and/or a magnitude of the tunable capacitance.

**20.** The superconducting qubit coupling apparatus according to any one of claims 1 to 19, wherein the first superconducting qubit is a fixed-frequency transmon, a tunable transmon, a fluxonium qubit, or a capacitively shunted flux qubit, and the second superconducting qubit is a fixed-frequency transmon, a tunable transmon, a fluxonium qubit, or a capacitively shunted flux qubit.

**21.** A superconducting quantum chip, comprising a plurality of superconducting qubit coupling apparatuses according to any one of claims 1 to 20, wherein the plurality of superconducting qubit coupling apparatuses are distributed in an array, every two adjacent superconducting qubit coupling apparatuses share one superconducting qubit, and the first superconducting qubit and the second superconducting qubit in each superconducting qubit coupling apparatus both comprise two ungrounded electrodes; and

the shared superconducting qubit is first superconducting qubits or second superconducting qubits in the two adjacent superconducting qubit coupling apparatuses;
or,
the shared superconducting qubit is a first superconducting qubit in one of the two adjacent superconducting qubit coupling apparatuses, and the shared superconducting qubit is a second superconducting qubit in the other of the two adjacent superconducting qubit coupling apparatuses.

**22.** A superconducting quantum chip, comprising a plurality of superconducting qubit coupling apparatuses according to any one of claims 1 to 20, wherein the plurality of superconducting qubit coupling apparatuses are distributed in an array, every two adjacent superconducting qubit coupling apparatuses share one superconducting qubit, the first superconducting qubit in each superconducting qubit coupling apparatus comprises a first electrode and a second electrode, neither the first electrode nor the second electrode is grounded, the first electrode comprises two interconnected sub-electrodes, the second electrode comprises two interconnected sub-electrodes, the two sub-electrodes of the first electrode and the two sub-electrodes of the second electrode cross, and the shared superconducting qubit is first superconducting qubits or second superconducting qubits in the two adjacent superconducting qubit coupling apparatuses.

**23.** A quantum computer, comprising a dilution refrigerator, a measurement and control system, and the superconducting quantum chip according to claim 21 or 22.

Superconducting qubit

Coupler

Superconducting qubit coupling apparatus

Dilution refrigerator

Measurement and control system

Superconducting quantum chip

FIG. 1

FIG. 2

| Fixed-frequency transmon | Tunable transmon | Capacitively shunted flux bit | Fluxonium bit with a linear inductor | Fluxonium bit with large junctions connected in series |
|---|---|---|---|---|

⊠ Josephson junction    ⊣⊢ Capacitance    ⌇ Linear inductor    ⌇ Current bias line    ⏚ Ground terminal

FIG. 3

EP 4 734 008 A1

FIG. 4

FIG. 5(a)

EP 4 734 008 A1

FIG. 5(b)

FIG. 6

FIG. 7

FIG. 8

(a)                                          (b)

503

501                          501

50                                        502

502

Or

504

FIG. 9

30

(a) Single tunable          (b) Dual tunable          (c) Single tunable          (d) Dual tunable
TCQ coupler                TCQ coupler           shared-transmission-      shared-transmission-
                                                      line coupler                line coupler

⊠─ Josephson      ─┤├─ Capacitance  ─ww─ Linear      ⌐ Current      ⊥ Ground      ⊏⊐ Transmission
   junction                                inductor ⌣⌣ bias line  ═ terminal                  line

FIG. 10

(a)                                          (b)

505                          505

50                                        506

Or

FIG. 11

EP 4 734 008 A1

FIG. 12

FIG. 13

## INTERNATIONAL SEARCH REPORT

| International application No. |
|---|
| **PCT/CN2024/112961** |

**A.    CLASSIFICATION OF SUBJECT MATTER**

G06N 10/20(2022.01)i

According to International Patent Classification (IPC) or to both national classification and IPC

**B.    FIELDS SEARCHED**

Minimum documentation searched (classification system followed by classification symbols)

IPC: G06N

Documentation searched other than minimum documentation to the extent that such documents are included in the fields searched

Electronic data base consulted during the international search (name of data base and, where practicable, search terms used)

VEN, CNABS, CNTXT, WOTXT, USTXT, EPTXT, IEEE, CNKI: 超导, 量子, 比特, 耦合, 谐振电路, 耦合强度, 差值, 小于, 频率, 关断, 关闭, 泄露, 芯片, superconducting, quantum, bit, coupling, resonant circuit, coupling strength, difference, less, frequency, off, leakage, chip

**C.    DOCUMENTS CONSIDERED TO BE RELEVANT**

| Category* | Citation of document, with indication, where appropriate, of the relevant passages | Relevant to claim No. |
|---|---|---|
| A | CN 114723061 A (INSPUR GROUP CO., LTD.) 08 July 2022 (2022-07-08) description, paragraphs [0003]-[0052] | 1-23 |
| A | CN 114595821 A (BEIJING BAIDU NETCOM SCIENCE AND TECHNOLOGY CO., LTD.) 07 June 2022 (2022-06-07) entire document | 1-23 |
| A | CN 115271077 A (HUAWEI TECHNOLOGIES CO., LTD.) 01 November 2022 (2022-11-01) entire document | 1-23 |
| A | CN 115730666 A (HEFEI ORIGIN QUANTUM COMPUTING TECHNOLOGY CO., LTD.) 03 March 2023 (2023-03-03) entire document | 1-23 |
| A | US 2021110290 A1 (BEIJING BAIDU NETCOM SCIENCE AND TECHNOLOGY CO., LTD.) 15 April 2021 (2021-04-15) entire document | 1-23 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 October 2024** | **23 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/112961** |

**C.    DOCUMENTS CONSIDERED TO BE RELEVANT**

| Category* | Citation of document, with indication, where appropriate, of the relevant passages | Relevant to claim No. |
|---|---|---|
| A | US 2021326737 A1 (BEIJING BAIDU NETCOM SCIENCE AND TECHNOLOGY CO., LTD.) 21 October 2021 (2021-10-21)<br>    entire document | 1-23 |

Form PCT/ISA/210 (second sheet) (July 2022)

**INTERNATIONAL SEARCH REPORT**
Information on patent family members

International application No.

**PCT/CN2024/112961**

| Patent document cited in search report | | | Publication date (day/month/year) | Patent family member(s) | | | Publication date (day/month/year) |
|---|---|---|---|---|---|---|---|
| CN | 114723061 | A | 08 July 2022 | None | | | |
| CN | 114595821 | A | 07 June 2022 | None | | | |
| CN | 115271077 | A | 01 November 2022 | None | | | |
| CN | 115730666 | A | 03 March 2023 | None | | | |
| US | 2021110290 | A1 | 15 April 2021 | US | 11755940 | B2 | 12 September 2023 |
| | | | | AU | 2020230284 | A1 | 29 April 2021 |
| | | | | AU | 2020230284 | B2 | 04 November 2021 |
| | | | | JP | 2021064361 | A | 22 April 2021 |
| | | | | JP | 7075971 | B2 | 26 May 2022 |
| | | | | CN | 110738320 | A | 31 January 2020 |
| US | 2021326737 | A1 | 21 October 2021 | AU | 2020256387 | A1 | 04 November 2021 |
| | | | | AU | 2020256387 | B2 | 09 December 2021 |
| | | | | JP | 2021175178 | A | 01 November 2021 |
| | | | | JP | 7104131 | B2 | 20 July 2022 |
| | | | | CN | 111523672 | A | 11 August 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311077099